(19) Europäisches Patentamt

European Patent Office

Office européen des brevets

(11) **EP 1 111 275 B1**

(12) **EUROPÄISCHE PATENTSCHRIFT**

(45) Veröffentlichungstag und Bekanntmachung des Hinweises auf die Patenterteilung:
**27.04.2005  Patentblatt 2005/17**

(51) Int Cl.⁷: **F16H 61/22**, F16H 63/48, F16H 59/10

(21) Anmeldenummer: **00125176.8**

(22) Anmeldetag: **18.11.2000**

(54) **Fahrstufenwähleinrichtung mit einer Notentriegelung für eine Parksperre**

Range selector with emergency release for a parking brake

Commande de sélection de gamme avec déverrouillage de secours pour un frein de stationnement

(84) Benannte Vertragsstaaten:
**DE FR GB IT**

(30) Priorität: **22.12.1999  DE 19962243**

(43) Veröffentlichungstag der Anmeldung:
**27.06.2001  Patentblatt 2001/26**

(73) Patentinhaber: **Bayerische Motoren Werke Aktiengesellschaft
80809 München (DE)**

(72) Erfinder:
• **Neuner, Josef
83064 Raubling (DE)**
• **Woeste, Norbert
80939 München (DE)**
• **Ehrmaier, Rudolf
81927 München (DE)**

(56) Entgegenhaltungen:
**DE-C- 4 317 257          DE-C- 4 422 257
US-A- 5 704 457**

EP 1 111 275 B1

**Beschreibung**

Die Erfindung betrifft eine Fahrstufenwähleinrichtung gemäß dem Oberbegriff des Patentanspruches 1.

Eine derartige Fahrstufenwähleinrichtung ist aus der US 5 704 457 bekannt.

Ferner ist aus der DE 43 17 257 C1 eine Parksperre für ein automatisches Kraftfahrzeuggetriebe bekannt.

Der Betriebsbereich eines Automatikgetriebes ist in verschiedene manuell vorwählbare Betriebsstufen unterteilt, die als Fahrstufen bezeichnet werden. Der Begriff Fahrstufen, wie er hier verwendet wird, umfaßt alle Betriebsstufen eines Automatikgetriebes, also auch die Park- oder Neutralposition.

Es ist bereits bekannt, die an einer Steuereinrichtung vom Fahrer ausgewählten Fahrstufen in einem automatischen Kraftfahrzeuggetriebe durch von einem Getriebesteuergerät angesteuerte elektrohydraulische Stellglieder einzulegen.

Die DE 4422257 C 1 beschreibt eine Fahrstufenwähleinrichtung für ein automatisches Kraftfahrzeuggetriebe, bei der sich die Parksperre nach ausschalten der Zündung von selbst einlegt. Um das Fahrzeug bei Funktionsausfall der Fahrstufenwähleinrichtung und eingelegter Parksperre abschleppen zu können, ist beschrieben, daß die Parksperre durch eine vom Fahrer bedienbare Notentriegelung außer Eingriff gebracht werden kann. Diese Notentriegelung ist eine Wirkverbindung, z. B. als Bowdenzug ausgeführt, zwischen von einem Fahrer bedienbaren Handhebel und einer Entriegelungseinrichtung für die Parksperre.

Bei dieser Parksperrennotentriegelung ist eine mechanische Verbindung, zum Beispiel durch einen Bowdenzug, zwischen der Steuereinrichtung und der Entriegelungseinrichtung im Getriebe notwendig.

Aufgabe der Erfindung ist es, eine Fahrstufenwähleinrichtung mit einer Notentriegelung für die Parksperre eines automatischen Kraftfahrzeuggetriebes bereitzustellen, bei der die Steuereinrichtung keine mechanische Verbindung mehr zur Entriegelungseinrichtung im Getriebe besitzt und die einfach aufgebaut ist.

Die Aufgabe wird mit den Merkmalen des Anspruchs 1 gelöst. Weitere Ausgestaltungen der Erfindung ergeben sich aus den Unteransprüchen.

Nach der Erfindung ist eine Fahrstufenwähleinrichtung zum Anwählen mindestens der Automatikgetriebe - Betriebsstufen "D", "N", "R", "P" eines automatischen Kraftfahrzeuggetriebes, die vom Fahrer über eine Steuereinrichtung ausgewählt und von durch eine Getriebesteuereinrichtung angesteuerten elektrohydraulischen Stellgliedem eingelegt werden, wobei eine in der Fahrstufe "P" eingelegte Parksperre durch eine vom Fahrer über eine Bedieneinrichtung, insbesondere einen Handhebel, betätigbare Entriegelungseinrichtung im Automatikgetriebegehäuse außer Eingriff gebracht werden kann, weshalb die Bedieneinrichtung durch einen Bowdenzug mit einem Entriegelungshebel der Entriegelungseinrichtung verbunden ist und der Entriegelungshebel fest auf einer Achse angebracht ist, die sich beim in und außer Eingriff bringen der Parksperre durch die elektrohydraulischen Stellglieder vor- und zurückdreht und damit den Entriegelungshebel hin- und herschwenkt, dadurch gekennzeichnet, daß die Schwenkbewegung des Entriegelungshebels nicht auf den Bowdenzug übertragen wird, da sich der Entriegelungshebel entlang einer in ihm eingehängten Bowdenzuglitze bewegen kann weil ein Formschluß zwischen Bowdenzuglitze und Entriegelungshebel über eine Verdickung der Bowdenzuglitze nur dann erreicht wird, wenn die Bedieneinrichtung betätigt wird.

Eine solche Gestaltung einer Notentriegelung der Parksperre kommt vorteilhafterweise mit wenigen Bauteilen aus und ist einfach bei jedem Fahrzeugkonzept integrierbar.

Eine bevorzugte Ausführung der Erfindung ist dadurch gekennzeichnet, daß am Entriegelungshebel eine Lasche ausgebildet ist, durch die sich die Bowdenzuglitze hindurch erstreckt und daß, vom Entriegelungshebel aus gesehen, auf einer Seite an der Bowdenzuglitze die Bedieneinrichtung angebracht ist und auf der anderen Seite an der Bowdenzuglitze die Verdickung angebracht ist, die so gestaltet ist, daß sie nicht durch die Lasche hindurch gezogen werden kann.

Das hat den Vorteil, daß die einzelnen Teile der Notentriegelung der Parksperre sehr einfach aufgebaut und zu montieren sind.

Eine weitere bevorzugte Ausführung der Erfindung ist dadurch gekennzeichnet, daß die Verdickung der Bowdenzuglitze an einer Stelle mit einem solchen Abstand vom Entriegelungshebel angebracht ist, daß es dem Entriegelungshebel möglich ist, seine Drehbewegung mit der Achse auszuführen, wenn die Parksperre durch die elektrohydraulischen Stellglieder in und außer Eingriff gebracht wird, daß aber bei in Eingriff gebrachter Parksperre die Verdickung der Bowdenzuglitze mit dem Entriegelungshebel in Berührung kommt, wenn die Betätigungseinrichtung betätigt wird und daß dadurch die Parksperre von ihrer in Eingriff Stellung in ihre außer Eingriff Stellung gebracht wird.

Dies ist eine Ausführung der Erfindung, die zusätzlich noch schnell zu montieren und wenig störanfällig ist.

Ein bevorzugtes Ausführungsbeispiel der Erfindung beschreibt die nachfolgende Beschreibung mit der zugehörigen Zeichnung. Es zeigen:

Figur 1:     Eine Darstellung einer Entriegelungseinrichtung am Automatikgetriebegehäuse,

Figur 2:     den Entriegelungshebel der Entriegelungseinrichtung gedreht dargestellt und

Figur 3:     den Stützwinkel der Entriegelungseinrichtung gedreht dargestellt.

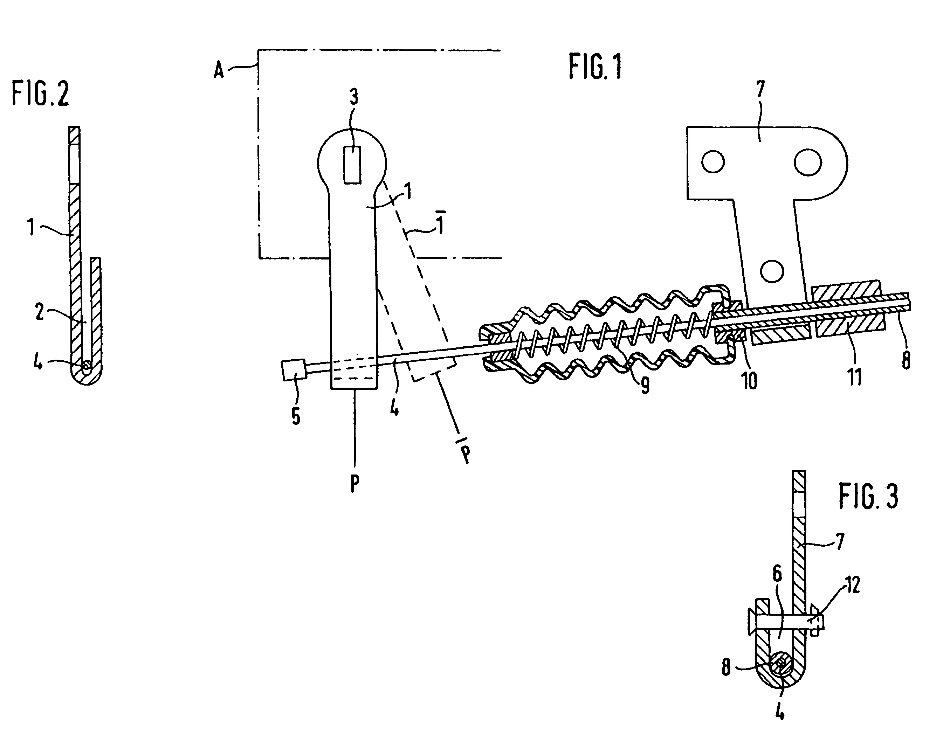

Nach Figur 1 besteht eine Entriegelungseinrichtung für eine Parksperre eines Automatikgetriebes aus einem Entriegelungshebel 1,$\bar{1}$, der fest auf einer Achse 3 angebracht ist, die sich beim in und außer Eingriff bringen der Parksperre vor- und zurückdreht. Dabei bezeichnet der Begriff vordrehen eine Drehung der Achse 3 im Uhrzeigersinn und der Begriff zurückdrehen eine Drehung der Achse 3 entgegen dem Uhrzeigersinn. Der Entriegelungshebel 1,$\bar{1}$ dreht sich also mit der Achse 3 drehfest verbunden immer mit dieser mit, wenn die Fahrstufe "P" des automatischen Kraftfahrzeuggetriebes von durch die Getriebesteuereinrichtung angesteuerten elektrohydraulischen Stellgliedem in oder außer Eingriff gebracht wird.

Die Entriegelungseinrichtung für die Parksperre befindet sich am nicht gezeichneten Automatikgetriebegehäuse, angedeutet gezeichnet durch einen strichpunktiert umrandeten Ausschnitt A. Aus dem Automatikgetriebegehäuse heraus ragt der Entriegelungshebel 1,$\bar{1}$, zum Anschluß einer Entriegelungseinrichtung zu dessen Betätigung.

Durch gestrichelte Linien ist der Entriegelungshebel $\bar{1}$ in seiner anderen möglichen Stellung $\bar{1}$ gezeichnet. In der vorgedrehten Stellung, wie dargestellt, ist die Parksperre des automatischen Getriebes in Eingriff P. Wird der Entriegelungshebel 1 entgegen den Uhrzeigersinn zurückgedreht, ist die Parksperre des automatischen Getriebes außer Eingriff $\bar{P}$.

Der Entriegelungshebel 1,$\bar{1}$ ist als U-förmiger Hebel gestaltet (Figur 2). In eine U-förmige Lasche 2 ist eine Bowdenzuglitze 4 eingelegt. Diese erstreckt sich durch die Lasche 2 hindurch und, vom Entriegelungshebel 1,$\bar{1}$ aus gesehen, führt die Bowdenzuglitze 4 auf einer Seite zu einem nicht gezeichneten Handhebel einer nicht gezeichneten Bedieneinrichtung im nicht dargestellten Fahrzeuginnenraum. Auf einer anderen Seite ist an der Bowdenzuglitze 4 eine Verdickung 5 angebracht, die so gestaltet ist, daß sie nicht durch die Lasche 2 hindurch gezogen werden kann.

Durch Betätigen des Handhebels der Bedieneinrichtung durch den Fahrer, wird der Entriegelungshebel 1 von seiner Position mit eingelegter Parksperre P in seine gestrichelt gezeichnete Position $\bar{1}$ mit nicht eingelegter Parksperre $\bar{P}$ zurückgedreht. Dies deshalb, da auf der anderen Seite an der Bowdenzuglitze 4 die Verdikkung 5 angebracht ist, die so gestaltet ist, daß sie nicht durch die Lasche 2 hindurch gezogen werden kann.

Eine Rückstellfeder 9 dient dazu, die Bowdenzuglitze 4 nach einer Entriegelung der Parksperre über den Entriegelungshebel 1,$\bar{1}$ in ihre gezeichnete Position zurückzubringen. Rückstellfeder 9 und Bowdenzug 8 sind an einem karosseriefesten Stützwinkel 7 befestigt und zwar in eine weitere Lasche 6 eingelegt, gesichert durch Metallhülsen 10,11 und einen Splint 12.

Die Rückstellung des Entriegelungshebels $\bar{1}$ ist manuell nicht notwendig, da dieser ja durch die elektrohydraulischen Stellglieder im Automatikgetriebe zurückgestellt wird. Damit dies möglich ist, ist die Verdickung 5 an der Bowdenzuglitze 4 an einer Stelle mit einem solchen Abstand vom Entriegelungshebel 1,$\bar{1}$ angebracht, daß es dem Entriegelungshebel 1,$\bar{1}$ möglich ist, seine Drehbewegung mit der Achse 3 auszuführen, wenn die Parksperre durch die elektrohydraulischen Stellglieder in und außer Eingriff gebracht wird. Bei in Eingriff gebrachter Parksperre P kommt aber die Verdickung 5 der Bowdenzuglitze 4 mit dem Entriegelungshebel 1 in Berührung, wenn die Betätigungseinrichtung betätigt wird. Dadurch wird die Parksperre von ihrer in Eingriff Stellung P in ihre außer Eingriff Stellung $\bar{P}$ gebracht.

## Patentansprüche

1. Fahrstufenwähleinrichtung zum Anwählen mindestens der Automatikgetriebe - Betriebsstufen "D", "N", "R", "P" eines automatischen Kraftfahrzeuggetriebes, die vom Fahrer über eine Steuereinrichtung ausgewählt und von durch eine Getriebesteuereinrichtung angesteuerten elektrohydraulischen Stellgliedern eingelegt werden, wobei eine in der Fahrstufe "P" eingelegte Parksperre durch eine vom Fahrer über eine Bedieneinrichtung, insbesondere einen Handhebel, betätigbare Entriegelungseinrichtung im Automatikgetriebegehäuse außer Eingriff gebracht werden kann, weshalb die Bedieneinrichtung durch einen Bowdenzug (8) mit einem Entriegelungshebel (1, $\bar{1}$) der Entriegelungseinrichtung verbunden ist und der Entriegelungshebel (1, $\bar{1}$) fest auf einer Achse (3) angebracht ist, die sich beim in und außer Eingriff bringen der Parksperre durch die elektrohydraulischen Stellglieder vor- und zurückdreht und damit den Entriegelungshebel (1,$\bar{1}$) hin- und herschwenkt, wobei die Schwenkbewegung des Entriegelungshebels (1, $\bar{1}$) nicht auf eine Bowdenzuglitze (4) übertragen wird, **dadurch gekennzeichnet, dass** ein Formschluss zwischen der Bowdenzuglitze (4) und dem Entriegelungshebel (1,$\bar{1}$) über eine Verdickung (5) der Bowdenzuglitze (4) nur dann erreicht wird, wenn die Bedieneinrichtung betätigt wird, so dass sich der Entriegelungshebel (1, $\bar{1}$) entlang der in ihm eingehängten Bowdenzuglitze bewegen kann, wobei am Entriegelungshebel (1, $\bar{1}$) am Entriegelungshebel (1, $\bar{1}$) eine Lasche (2) ausgebildet ist, durch die sich die Bowdenzuglitze (4) hindurch erstreckt und dass, vom Entriegelungshebel (1, $\bar{1}$) aus gesehen, auf einer Seite an der Bowdenzuglitze (4) die Bedieneinrichtung angebracht ist und auf der anderen Seite an der Bowdenzuglitze (4) die Verdickung (5) angebracht ist, die so gestaltet ist, daß sie nicht durch die Lasche (2) hindurch gezogen werden kann.

2. Fahrstufenwähleinrichtung nach Anspruch 1, **dadurch gekennzeichnet, daß** die Verdickung (5) der Bowdenzuglitze (4) an einer Stelle mit einem solchen Abstand vom Entriegelungshebel (1,$\bar{1}$) angebracht ist, daß es dem Entriegelungshebel (1, $\bar{1}$) möglich ist, seine Drehbewegung mit der Achse (3) auszuführen, wenn die Parksperre durch die elektrohydraulischen Stellglieder in und außer Eingriff gebracht wird, daß aber bei in Eingriff gebrachter Parksperre (P) die Verdickung (5) der Bowdenzuglitze (4) mit dem Entriegelungshebel (1, $\bar{1}$) in Berührung kommt, wenn die Betätigungseinrichtung betätigt wird und daß dadurch die Parksperre von ihrer in Eingriff Stellung (P) in ihre außer Eingriff Stellung ($\bar{P}$) gebracht wird.

## Claims

1. A driving-mode selection device for selecting at least the automatic gear operating stages "D", "N", "R", "P" of an automatic motor-vehicle gear unit, the stages being selected by the driver via a control device and engaged by electrohydraulic actuators operated by a gear control device, wherein a parking brake engaged in the driving mode "P" can be disengaged in the automatic gearbox by an unlocking device actuated by the driver via an operating device, especially a hand lever, for which purpose the operating device is connected by a Bowden cable (8) to an unlocking lever (1, $\bar{1}$) of the unlocking device and the unlocking lever (1, $\bar{1}$) is permanently mounted on a shaft (3) which rotates forwards and backwards when the parking brake is engaged and disengaged by the electrohydraulic actuators and consequently pivots the unlocking lever (1, $\bar{1}$) backwards and forwards, wherein the pivoting motion of the unlocking lever (1, $\bar{1}$) is not transmitted to a Bowden cable conductor (4), **characterised in that** a positive engagement between the Bowden cable conductor (4) and the unlocking lever (1, $\bar{1}$) via a thick part (5) of the Bowden cable conductor (4) is obtained only when the operating device is actuated, so that the unlocking lever (1, $\bar{1}$) can move along the Bowden cable conductor suspended in the unlocking lever (1,1), wherein a lug (2) through which the Bowden cable conductor (4) extends is formed on the unlocking lever (1, $\bar{1}$) and, regarded from the unlocking lever (1, $\bar{1}$) the operating device is mounted on one side of the Bowden cable conductor (4) and the thick part (5) is mounted on the other side of the Bowden cable conductor (4) and is designed so that it cannot be pulled through the lug (2).

2. A driving mode selection device according to claim 1, **characterised in that** the thick part (5) of the Bowden cable conductor (4) is disposed at a place at a distance from the unlocking lever (1, $\bar{1}$) such that the unlocking lever (1, $\bar{1}$) can rotate on the shaft (3) when the parking brake is brought into and out of engagement by the electrohydraulic actuators, but when the parking brake (P) is engaged the thick part (5) of the Bowden cable conductor (4) comes in contact with the unlocking lever (1, $\bar{1}$) if the actuating device is operated and consequently the parking brake is brought from its engaged position (P) into its disengaged position (P).

## Revendications

1. Commande de sélection de gamme pour choisir au moins les gammes de fonctionnement "D", "N", "R", "P" d'une transmission automatique d'un véhicule automobile qui peuvent être sélectionnées par le conducteur au moyen d'un dispositif de commande et mises en service par des organes de réglage électrohydrauliques actionnés par un dispositif de commande de la transmission, dans laquelle un frein de parking engagé à la gamme "P" peut être dégagé par le conducteur au moyen d'un dispositif de déverrouillage monté dans le boîtier de la transmission automatique et actionnable par un dispositif de manoeuvre, notamment un levier à main, et pour cela, le dispositif de manoeuvre est relié par un câble Bowden (8) à un levier de déverrouillage (1,$\bar{1}$) du dispositif de déverrouillage qui est solidaire d'un axe (3) pouvant, quand le frein de parking est amené en prise ou est dégagé, avancer ou reculer en rotation sous l'action des organes de réglage électrohydrauliques, et ainsi faire basculer vers l'avant et vers l'arrière le levier de déverrouillage (1,$\bar{1}$) sans que le mouvement de ce levier soit transmis au toron de traction (4) du câble Bowden, **caractérisée en ce qu'**

   - un verrouillage par combinaison de formes entre le toron de traction du câble Bowden (4) et le levier de déverrouillage (1,$\bar{1}$) est assuré par un épaississement (5) du toron (4) seulement quand est actionné le dispositif de manoeuvre, de manière que le levier de déverrouillage (1,$\bar{1}$) peut se déplacer le long du toron de traction du câble Bowden qui lui est associé,
   - sur le levier de déverrouillage (1,$\bar{1}$) est formée une attache (2) à travers laquelle passe le toron du câble Bowden (4), et sur ce toron, quand on l'observe depuis le levier (1,$\bar{1}$) le dispositif de manoeuvre se trouve d'un côté, tandis que de l'autre côté se trouve l'épaississement (5) configuré de manière à ne pas pouvoir passer à travers l'attache (2).

2. Commande de sélection de gamme selon la revendication 1, **caractérisée en ce que** l'épaississement (5) du toron de traction Bowden (4) se trouve en un endroit disposé, par rapport au levier de déverrouillage (1,$\bar{1}$), à une distance telle que celui-ci peut tourner avec l'axe (3) quand le frein de parking est amené en prise ou est dégagé par les organes de réglage électrohydrauliques, mais quand le frein de parking (P) est en prise, l'épaississement (5) du toron de traction Bowden (4) vient en contact avec le levier de déverrouillage (1,$\bar{1}$) quand le dispositif de manoeuvre est actionné et ainsi le frein de parking passe de sa position (P) où il est en prise, à sa position ($\bar{P}$) où il n'est pas en prise.

FIG.2

FIG.1

FIG.3

EP 1 111 275 B1